# EUROPEAN PATENT APPLICATION

(11) **EP 3 678 320 A1**
(43) Date of publication of application: **08.07.2020**
(21) Application number: 18862662.6
(22) Date of filing: 17.09.2018
(51) Int. Cl.: H04L 5/00

(54) **CARRIER STATUS INDICATION METHOD AND DEVICE**

(30) Priority: 29.09.2017 CN 201710938933
(71) Applicant: Huawei Technologies Co., Ltd., Longgang District Shenzhen, Guangdong 518129 (CN)
(72) Inventor: ZHANG, Zhang, Shenzhen Guangdong 518129 (CN); WANG, Fan, Shenzhen Guangdong 518129 (CN)
(74) Representative: Thun, Clemens
(86) International application number: PCT/CN2018/106041
(87) International publication number: WO 2019/062583

(57) **Abstract**

This application discloses a carrier status indication method and device, to support carrier activation and deactivation in NR. The method includes: communicating, by a communications apparatus, with a network device on a first uplink carrier based on a first downlink carrier; and receiving, by the communications apparatus, carrier status indication information sent by the network device. The carrier status indication information indicates carrier statuses of M carriers corresponding to N cells that are of the network device and that serve the communications apparatus, and the carrier status includes an activated state and a deactivated state. The carrier status indication information indicates that the first downlink carrier is in a deactivated state and that the first uplink carrier is in an activated state, and both the first downlink carrier and the first uplink carrier are carriers of the M carriers. Therefore, flexible carrier activation and deactivation in the NR can be implemented by using the method provided in this application.

## Description

This application claims priority to Chinese Patent Application No. 201710938933.9, filed with the Chinese Patent Office on September 29, 2017 and entitled "CARRIER STATUS INDICATION METHOD AND DEVICE", which is incorporated herein by reference in its entirety.

### TECHNICAL FIELD

This application relates to the field of wireless communications technologies, and in particular, to a carrier status indication method and device.

### BACKGROUND

A quantity of intelligent terminal users grows, and a user service volume and a data throughput continuously increase, and therefore, a higher requirement is imposed on a communication rate. However, it is difficult to find contiguous high bandwidth for mobile communication because of a shortage of radio spectrum resources. Therefore, in a long term evolution (Long Term Evolution, LTE) communications system, a carrier aggregation (Carrier Aggregation, CA) technology is introduced, to aggregate a plurality of contiguous or discontiguous spectrums for use. This technically resolves requirements of the mobile communication for high bandwidth, and improves utilization of scattered spectrums at a wireless frequency band.

In a 5th generation (the 5th generation, 5G) new radio (new radio, NR), CA is also a necessary function. Compared with LTE, the CA in the NR may be applied in more scenarios. Therefore, how to support carrier activation and deactivation in the NR needs to be considered.

### SUMMARY

This application provides a carrier status indication method and device, to support carrier activation and deactivation in NR.

According to a first aspect, this application provides a carrier status indication method, where the method includes: communicating, by a communications apparatus, with a network device on a first uplink carrier based on a first downlink carrier; and receiving, by the communications apparatus, carrier status indication information sent by the network device, where the carrier status indication information indicates carrier statuses of M carriers corresponding to N cells that are of the network device and that serve the communications apparatus, the carrier status includes an activated state and a deactivated state, and both N and M are positive integers, where the carrier status indication information indicates that the first downlink carrier is in a deactivated state and that the first uplink carrier is in an activated state, and both the first downlink carrier and the first uplink carrier are carriers of the M carriers. Therefore, uplink and downlink decoupling can be supported in the foregoing carrier status indication method, so that a carrier status of an uplink carrier does not rely on a carrier status of a downlink carrier.

In a possible design, the carrier status indication information indicates that a second downlink carrier of the M carriers is in an activated state.

After the receiving, by the communications apparatus, carrier status indication information sent by the network device, the communications apparatus communicates with the network device on the first uplink carrier based on the second downlink carrier. Therefore, the communications apparatus can communicate with the network device on the newly determined second downlink carrier used to schedule the first uplink carrier.

In a possible design, the carrier status indication information indicates carrier statuses of an uplink carrier and a downlink carrier that are corresponding to each of the N cells that are of the network device and that serve the communications apparatus. When the carrier status indication information indicates, in a bitmap manner, the carrier statuses of the M carriers corresponding to the N cells that serve the communications apparatus, specifically, there may be the following two cases: (1) Each cell corresponds to two bits, and the two bits correspond to a carrier status of an uplink carrier and a carrier status of a downlink carrier. In this case, the carrier status of the uplink carrier corresponding to each cell is uniformly indicated, and the carrier status of the downlink carrier corresponding to each cell is uniformly indicated. (2) Each uplink carrier that is corresponding to each cell corresponds to one bit, and each downlink carrier that is corresponding to each cell corresponds to one bit. Therefore, flexible and independent configuration of carrier statuses of carriers can be implemented.

In a possible design, the carrier status indication information indicates a carrier status of each of the M carriers. Therefore, signaling overheads can be reduced.

In a possible design, if carriers corresponding to a first cell of the N cells that are of the network device and that serve the communications apparatus include a preset-type uplink carrier and at least one carrier other than the preset-type uplink carrier, the carrier status indication information indicates a carrier status of the preset-type uplink carrier corresponding to the first cell and a carrier status of the at least one carrier, other than the preset-type uplink carrier, corresponding to the first cell. In this case, the carrier status of the at least one carrier, other than the preset-type uplink carrier, corresponding to the first cell may be uniformly indicated, or a carrier status of the at least one carrier other than the preset-type uplink carrier may be separately indicated.

Alternatively, if carriers corresponding to a first cell of the N cells that are of the network device and that serve the communications apparatus include a preset-type uplink carrier and at least one carrier other than the preset-type uplink carrier, the carrier status indication information indicates a carrier status of an uplink carrier corresponding to the first cell, and a carrier status of a downlink carrier corresponding to the first cell.

If a carrier corresponding to a second cell of the N cells that serve the communications apparatus includes only a preset-type uplink carrier, the carrier status indication information indicates a carrier status of the preset-type uplink carrier corresponding to the second cell. If a carrier corresponding to a third cell of the N cells that serve the communications apparatus does not include a preset-type uplink carrier, the carrier status indication information indicates carrier statuses of all carriers corresponding to the third cell. The carrier statuses of all the carriers corresponding to the third cell are uniformly indicated. Therefore, signaling overheads can be effectively reduced.

In a possible design, the carrier status indication information indicates a carrier status of each downlink carrier of the M carriers and a carrier status of each preset-type uplink carrier of the M carriers. Therefore, signaling overheads can be effectively reduced.

In a possible design, the preset-type uplink carrier is a supplementary uplink carrier SUL CC.

In a possible design, before communicating with the network device on the first uplink carrier based on the second downlink carrier, the communications apparatus determines the second downlink carrier based on a downlink carrier of the M carriers and first indication information, where the carrier status indication information indicates that the downlink carrier is in an activated state. The first indication information is predefined or preconfigured, and the first indication information is used to indicate a priority of a downlink carrier used to schedule the first uplink carrier.

In a possible design, the second downlink carrier is a DL PCC.

In a possible design, the carrier indication information further includes a carrier identifier of the downlink carrier used to schedule the first uplink carrier.

Therefore, this application provides a plurality of methods to flexibly determine the second downlink carrier.

According to a second aspect, this application provides a carrier status indication method, where the method includes:
scheduling, by a network device, a first uplink carrier based on a first downlink carrier; and
sending, by the network device, carrier status indication information, where the carrier status indication information indicates carrier statuses of M carriers corresponding to N cells that are of the network device and that serve a communications apparatus, the carrier status includes an activated state and a deactivated state, and both N and M are positive integers, where the carrier status indication information indicates that the first downlink carrier is in a deactivated state and that the first uplink carrier is in an activated state, and both the first downlink carrier and the first uplink carrier are carriers of the M carriers.

In a possible design, the carrier status indication information indicates carrier statuses of an uplink carrier and a downlink carrier that are corresponding to each of the N cells that are of the network device and that serve the communications apparatus.

In a possible design, the carrier status indication information indicates a carrier status of each of the M carriers.

In a possible design, if carriers corresponding to a first cell of the N cells that are of the network device and that serve the communications apparatus include a preset-type uplink carrier and at least one carrier other than the preset-type uplink carrier, the carrier status indication information indicates a carrier status of the preset-type uplink carrier corresponding to the first cell and a carrier status of the at least one carrier, other than the preset-type uplink carrier, corresponding to the first cell; or the carrier status indication information indicates a carrier status of an uplink carrier corresponding to the first cell, and a carrier status of a downlink carrier corresponding to the first cell.

In a possible design, the carrier status indication information indicates a carrier status of each downlink carrier of the M carriers and a carrier status of each preset-type uplink carrier of the M carriers.

In a possible design, the preset-type uplink carrier is a supplementary uplink carrier SUL CC.

In a possible design, the network device sends first indication information to the communications apparatus, where the first indication information is used to indicate a priority of a downlink carrier used to schedule the first uplink carrier.

In a possible design, a second downlink carrier is a DL PCC, and the second downlink carrier is the downlink carrier used to schedule the first uplink carrier.

In a possible design, the carrier indication information further includes a carrier identifier of the second downlink carrier.

According to a third aspect, this application provides a carrier status indication method, where the method includes: receiving, by a communications apparatus, carrier status indication information sent by a network device, where the carrier status indication information indicates carrier statuses of M carriers corresponding to N cells that are of the network device and that serve the communications apparatus, the carrier status includes an activated state and a deactivated state, and both N and M are positive integers, where the carrier status indication information indicates that a first uplink carrier is in an activated state, and after the network device sends the carrier status indication information to the communications apparatus, the first uplink carrier is switched from a deactivated state to an activated state. Therefore, the method provided in this application can be used to activate the first uplink carrier, for example, activating an SUL CC.

In a possible design, after receiving the carrier status indication information sent by the network device, the communications apparatus communicates with the network device on the first uplink carrier based on a first downlink carrier.

In a possible design, before communicating with the network device on the first uplink carrier based on the first downlink carrier, the communications apparatus determines the first downlink carrier based on a downlink carrier of the M carriers and first indication information, where the carrier status indication information indicates that the downlink carrier is in an activated state. The first indication information is predefined or preconfigured, and the first indication information is used to indicate a priority of a downlink carrier used to schedule the first uplink carrier.

In a possible design, the first indication information indicates that a priority of a downlink carrier used to schedule the first uplink carrier last time when the first uplink carrier is in an activated state is higher than a priority of a DL PCC.

In a possible design, the first downlink carrier is a DL PCC.

In a possible design, the carrier indication information further includes a carrier identifier of the downlink carrier used to schedule the first uplink carrier.

Therefore, this application provides a plurality of methods to flexibly determine the first downlink carrier.

In a possible design, the carrier status indication information indicates carrier statuses of an uplink carrier and a downlink carrier that are corresponding to each of the N cells that are of the network device and that serve the communications apparatus.

In a possible design, the carrier status indication information indicates a carrier status of each of the M carriers.

In a possible design, if carriers corresponding to a first cell of the N cells that are of the network device and that serve the communications apparatus include a preset-type uplink carrier and at least one carrier other than the preset-type uplink carrier, the carrier status indication information indicates a carrier status of the preset-type uplink carrier corresponding to the first cell and a carrier status of the at least one carrier, other than the preset-type uplink carrier, corresponding to the first cell; or the carrier status indication information indicates a carrier status of an uplink carrier corresponding to the first cell, and a carrier status of a downlink carrier corresponding to the first cell.

In a possible design, the carrier status indication information indicates a carrier status of each downlink carrier of the M carriers and a carrier status of each preset-type uplink carrier of the M carriers.

In a possible design, the preset-type uplink carrier is a supplementary uplink carrier SUL CC.

According to a fourth aspect, this application provides a carrier status indication method, where the method includes: sending, by a network device, carrier status indication information to a communications apparatus, where the carrier status indication information indicates carrier statuses of M carriers corresponding to N cells that are of the network device and that serve the communications apparatus, the carrier status includes an activated state and a deactivated state, and both N and M are positive integers, where the carrier status indication information indicates that a first uplink carrier is in an activated state, and after the network device sends the carrier status indication information to the communications apparatus, the first uplink carrier is switched from a deactivated state to an activated state.

In a possible design, after the communications apparatus receives the carrier status indication information sent by the network device, the network device schedules the first uplink carrier based on a first downlink carrier.

In a possible design, the carrier status indication information indicates carrier statuses of an uplink carrier and a downlink carrier that are corresponding to each of the N cells that are of the network device and that serve the communications apparatus.

In a possible design, the carrier status indication information indicates a carrier status of each of the M carriers.

In a possible design, if carriers corresponding to a first cell of the N cells that are of the network device and that serve the communications apparatus include a preset-type uplink carrier and at least one carrier other than the preset-type uplink carrier, the carrier status indication information indicates a carrier status of the preset-type uplink carrier corresponding to the first cell and a carrier status of the at least one carrier, other than the preset-type uplink carrier, corresponding to the first cell; or the carrier status indication information indicates a carrier status of an uplink carrier corresponding to the first cell, and a carrier status of a downlink carrier corresponding to the first cell.

In a possible design, the carrier status indication information indicates a carrier status of each downlink carrier of the M carriers and a carrier status of each preset-type uplink carrier of the M carriers.

In a possible design, the preset-type uplink carrier is a supplementary uplink carrier SUL CC.

In a possible design, the network device sends first indication information to the communications apparatus, where the first indication information is used to indicate a priority of a downlink carrier used to schedule the first uplink carrier.

In a possible design, the first indication information indicates that a priority of a downlink carrier used to schedule the first uplink carrier last time when the first uplink carrier is in an activated state is higher than a priority of a DL PCC.

In a possible design, the first downlink carrier is a DL PCC.

In a possible design, the carrier indication information further includes a carrier identifier of the first downlink carrier.

According to a fifth aspect, this application provides a carrier status indication method, where the method includes: receiving, by a communications apparatus, carrier status indication information sent by a network device, where the carrier status indication information indicates carrier statuses of M carriers corresponding to N cells that are of the network device and that serve the communications apparatus, the carrier status includes an activated state and a deactivated state, and both N and M are positive integers, where the carrier status indication information indicates that a second uplink carrier of the M carriers is in a deactivated state, the second uplink carrier has a physical uplink control channel PUCCH, and the second uplink carrier is a carrier in a primary PUCCH group. Therefore, an uplink carrier having a PUCCH in the primary PUCCH group may be deactivated.

In a possible design, the carrier status indication information indicates that a third uplink carrier of the M carriers is in an activated state, the third uplink carrier has a PUCCH, and the third uplink carrier is a carrier in the primary PUCCH group. Therefore, a new uplink carrier having a PUCCH in the primary PUCCH group may be determined from an uplink carrier in an activated state.

In a possible design, the communications apparatus receives downlink data on a downlink carrier in the primary PUCCH group, and the communications apparatus feeds back an ACK or a NACK to the network device on the third uplink carrier.

In a possible design, the carrier status indication information indicates carrier statuses of an uplink carrier and a downlink carrier that are corresponding to each of the N cells that are of the network device and that serve the communications apparatus.

In a possible design, the carrier status indication information indicates a carrier status of each of the M carriers.

In a possible design, if carriers corresponding to a first cell of the N cells that are of the network device and that serve the communications apparatus include a preset-type uplink carrier and at least one carrier other than the preset-type uplink carrier, the carrier status indication information indicates a carrier status of the preset-type uplink carrier corresponding to the first cell and a carrier status of the at least one carrier, other than the preset-type uplink carrier, corresponding to the first cell; or the carrier status indication information indicates a carrier status of an uplink carrier corresponding to the first cell, and a carrier status of a downlink carrier corresponding to the first cell.

In a possible design, the carrier status indication information indicates a carrier status of each downlink carrier of the M carriers and a carrier status of each preset-type uplink carrier of the M carriers.

In a possible design, the preset-type uplink carrier is a supplementary uplink carrier SUL CC.

In a possible design, the communications apparatus determines the third uplink carrier based on an uplink carrier of the M carriers and second indication information, where the carrier status indication information indicates that the uplink carrier is in an activated state. The second indication information is predefined or preconfigured, and the second indication information is used to indicate a priority of the uplink carrier having a PUCCH.

In a possible design, the third uplink carrier is a UL PCC.

In a possible design, the carrier indication information further includes a carrier identifier of the third uplink carrier.

According to a sixth aspect, this application provides a carrier status indication method, where the method includes: sending, by a network device, carrier status indication information to a communications apparatus, where the carrier status indication information indicates carrier statuses of M carriers corresponding to N cells that are of the network device and that serve the communications apparatus, the carrier status includes an activated state and a deactivated state, and both N and M are positive integers, where the carrier status indication information indicates that a second uplink carrier of the M carriers is in a deactivated state, the second uplink carrier has a physical uplink control channel PUCCH, and the second uplink carrier is a carrier in a primary PUCCH group. Therefore, an uplink carrier having a PUCCH in the primary PUCCH group may be deactivated.

In a possible design, the carrier status indication information indicates that a third uplink carrier of the M carriers is in an activated state, the third uplink carrier has a PUCCH, and the third uplink carrier is a carrier in the primary PUCCH group. Therefore, a new uplink carrier having a PUCCH in the primary PUCCH group may be determined from an uplink carrier in an activated state.

In a possible design, the carrier status indication information indicates carrier statuses of an uplink carrier and a downlink carrier that are corresponding to each of the N cells that are of the network device and that serve the communications apparatus.

In a possible design, the carrier status indication information indicates a carrier status of each of the M carriers.

In a possible design, if carriers corresponding to a first cell of the N cells that are of the network device and that serve the communications apparatus include a preset-type uplink carrier and at least one carrier other than the preset-type uplink carrier, the carrier status indication information indicates a carrier status of the preset-type uplink carrier corresponding to the first cell and a carrier status of the at least one carrier, other than the preset-type uplink carrier, corresponding to the first cell; or the carrier status indication information indicates a carrier status of an uplink carrier corresponding to the first cell, and a carrier status of a downlink carrier corresponding to the first cell.

In a possible design, the carrier status indication information indicates a carrier status of each downlink carrier of the M carriers and a carrier status of each preset-type uplink carrier of the M carriers.

In a possible design, the preset-type uplink carrier is a supplementary uplink carrier SUL CC.

In a possible design, the network device sends second indication information to the communications apparatus, where the second indication information is used to indicate a priority of the uplink carrier having a PUCCH.

In a possible design, the third uplink carrier is a UL PCC.

In a possible design, the carrier indication information further includes a carrier identifier of the third uplink carrier.

According to a seventh aspect, this application provides a carrier status indication apparatus, including a communications unit and a receiving unit. The communications unit is configured to communicate with a network device on a first uplink carrier based on a first downlink carrier; and the receiving unit is configured to receive carrier status indication information sent by the network device. The carrier status indication information indicates carrier statuses of M carriers corresponding to N cells that are of the network device and that serve a communications apparatus, the carrier status includes an activated state and a deactivated state, and both N and M are positive integers. The carrier status indication information indicates that the first downlink carrier is in a deactivated state and that the first uplink carrier is in an activated state, and both the first downlink carrier and the first uplink carrier are carriers of the M carriers.

The carrier status indication apparatus may further implement some or all of the possible designs of the first aspect.

According to an eighth aspect, this application provides a carrier status indication apparatus, including a scheduling unit and a sending unit. The scheduling unit is configured to schedule a first uplink carrier based on a first downlink carrier; and the sending unit is configured to send carrier status indication information. The carrier status indication information indicates carrier statuses of M carriers corresponding to N cells that are of a network device and that serve a communications apparatus, the carrier status includes an activated state and a deactivated state, and both N and M are positive integers.

The carrier status indication apparatus may further implement some or all of the possible designs of the second aspect.

According to a ninth aspect, this application provides a carrier status indication apparatus, including a receiving unit and a communications unit. The receiving unit is configured to receive carrier status indication information sent by a network device. The carrier status indication information indicates carrier statuses of M carriers corresponding to N cells that are of the network device and that serve a communications apparatus, the carrier status includes an activated state and a deactivated state, and both N and M are positive integers. The carrier status indication information indicates that a first uplink carrier is in an activated state, and after the network device sends the carrier status indication information to the communications apparatus, the first uplink carrier is switched from a deactivated state to an activated state. The communications unit is configured to communicate with the network device on the first uplink carrier based on a first downlink carrier.

The carrier status indication apparatus may further implement some or all of the possible designs of the third aspect.

According to a tenth aspect, this application provides a carrier status indication apparatus, including a sending unit and a scheduling unit. The sending unit is configured to send carrier status indication information to a communications apparatus. The carrier status indication information indicates carrier statuses of M carriers corresponding to N cells that are of a network device and that serve the communications apparatus, the carrier status includes an activated state and a deactivated state, and both N and M are positive integers. The carrier status indication information indicates that a first uplink carrier is in an activated state, and after the network device sends the carrier status indication information to the communications apparatus, the first uplink carrier is switched from a deactivated state to an activated state. The scheduling unit is configured to schedule the first uplink carrier based on a first downlink carrier.

The carrier status indication apparatus may further implement some or all of the possible designs of the fourth aspect.

According to an eleventh aspect, this application provides a carrier status indication apparatus, including a receiving unit and a sending unit. The receiving unit is configured to receive carrier status indication information sent by a network device. The carrier status indication information indicates carrier statuses of M carriers corresponding to N cells that are of the network device and that serve a communications apparatus, the carrier status includes an activated state and a deactivated state, and both N and M are positive integers. The carrier status indication information indicates that a second uplink carrier of the M carriers is in a deactivated state, the second uplink carrier has a physical uplink control channel PUCCH, and the second uplink carrier is a carrier in a primary PUCCH group. The carrier status indication information indicates that a third uplink carrier of the M carriers is in an activated state, the third uplink carrier has a PUCCH, and the third uplink carrier is a carrier in the primary PUCCH group. Therefore, a new uplink carrier having a PUCCH in the primary PUCCH group may be determined from an uplink carrier in an activated state.

The receiving unit is configured to receive downlink data on a downlink carrier in the primary PUCCH group, and the sending unit is configured to feed back an ACK or a NACK to the network device on the third uplink carrier.

The carrier status indication apparatus may further implement some or all of the possible designs of the fifth aspect.

According to a twelfth aspect, this application provides a carrier status indication apparatus, including a generating unit and a sending unit. The generating unit is configured to generate carrier status indication information, and the sending unit is configured to send the carrier status indication information to a communications apparatus. The carrier status indication information indicates carrier statuses of M carriers corresponding to N cells that are of a network device and that serve the communications apparatus, the carrier status includes an activated state and a deactivated state, and both N and M are positive integers. The carrier status indication information indicates that a second uplink carrier of the M carriers is in a deactivated state, the second uplink carrier has a physical uplink control channel PUCCH, and the second uplink carrier is a carrier in a primary PUCCH group.

The carrier status indication apparatus may further implement some or all of the possible designs of the sixth aspect.

According to a thirteenth aspect, this application provides a communications apparatus, including a transceiver, a processor, and a memory. The memory is configured to store a computer executable instruction. When the processor executes the computer executable instruction, the communications apparatus performs the method according to the first aspect, the third aspect, or the fifth aspect.

According to a fourteenth aspect, this application provides a network device, including a transceiver, a processor, and a memory. The memory is configured to store a computer executable instruction. When the processor executes the computer executable instruction, the network device performs the method according to the second aspect, the fourth aspect, or the sixth aspect.

According to a fifteenth aspect, this application further provides a communications system, where the communications system includes the communications apparatus according to the thirteenth aspect and the network device according to the fourteenth aspect.

According to a sixteenth aspect, this application provides a chip, where the chip is connected to a memory, and is configured to read and execute a program stored in the memory, to implement the method according to the first aspect, the third aspect, or the fifth aspect.

According to a seventeenth aspect, this application provides a chip, where the chip is connected to a memory, and is configured to read and execute a program stored in the memory, to implement the method according to the second aspect, the fourth aspect, or the sixth aspect.

According to an eighteenth aspect, this application provides a computer storage medium storing a computer executable instruction, where when the computer executable instruction runs on a computer, the computer performs the method according to the first aspect, the third aspect, or the fifth aspect.

According to a nineteenth aspect, this application provides a computer storage medium storing a computer executable instruction, where when the computer executable instruction runs on a computer, the computer performs the method according to the second aspect, the fourth aspect, or the sixth aspect.

According to a twentieth aspect, this application further provides a computer program product, where the computer program product includes a computer executable instruction, and when the computer executable instruction runs on a computer, the computer performs the method according to the first aspect, the third aspect, or the fifth aspect of this application.

According to a twenty-first aspect, this application further provides a computer program product, where the computer program product includes a computer executable instruction, and when the computer executable instruction runs on a computer, the computer performs the method according to the second aspect, the fourth aspect, or the sixth aspect of this application.

### BRIEF DESCRIPTION OF DRAWINGS

FIG. 1 is a first flowchart of an overview of a carrier status indication method according to this application;
FIG. 2 is a schematic diagram of a CC corresponding to each cell that is of a network device and that provides a service for a communications apparatus according to this application;
FIG. 3 is a first schematic diagram of indicating carrier status indication information in Manner 3 according to this application;
FIG. 4 is a first schematic diagram of indicating carrier status indication information in Manner 1 according to this application;
FIG. 5 is a schematic diagram of indicating carrier status indication information in Manner 2 according to this application;
FIG. 6 is a second schematic diagram of indicating carrier status indication information in Manner 3 according to this application;
FIG. 7 is a schematic diagram of indicating carrier status indication information in Manner 4 according to this application;
FIG. 8(a) and FIG. 8(b) are second schematic diagrams of indicating carrier status indication information in Manner 1 according to this application;
FIG. 9(a), FIG. 9(b), and FIG. 9(c) are third schematic diagrams of indicating carrier status indication information in Manner 3 according to this application;
FIG. 10 is a schematic diagram in which carrier status indication information includes a carrier identifier of a downlink carrier used to schedule an SUL CC according to this application;
FIG. 11 is a second flowchart of an overview of a carrier status indication method according to this application;
FIG. 12 is a third flowchart of an overview of a carrier status indication method according to this application;
FIG. 13 is a first schematic structural diagram of a carrier status indication apparatus according to this application;
FIG. 14 is a second schematic structural diagram of a carrier status indication apparatus according to this application;
FIG. 15 is a schematic structural diagram of a communications apparatus according to this application; and
FIG. 16 is a schematic structural diagram of a network device according to this application.

### DESCRIPTION OF EMBODIMENTS

Technical terms and application scenarios in this application are described first.

In a single-carrier scenario in which LTE is used as an example, a network device configures a frequency resource, where the frequency resource is used for downlink transmission and uplink transmission, and there is a predefined correspondence between an uplink frequency resource and a downlink frequency resource. For example, for a frequency division duplex (frequency domain duplex, FDD) spectrum, different frequency resources are used for the downlink transmission and the uplink transmission. For a time division duplex (time domain duplex, TDD) spectrum, a same frequency resource is used for the downlink transmission and the uplink transmission. In this case, based on a time division multiplexing manner, the network device performs the downlink transmission and a communications apparatus performs the uplink transmission on the same frequency domain resource.

In a CA scenario of NR, when a network device configures a frequency resource for a communications apparatus, the following different types of frequency resources may be configured:

1. A frequency domain resource pair or a frequency domain resource combination. When the communications apparatus needs to simultaneously use an uplink frequency domain resource and a downlink frequency domain resource, the network device configures, for the communications apparatus, an uplink frequency domain resource and a downlink frequency domain resource that can be simultaneously used. These two resources may be referred to as a frequency domain resource pair or a frequency domain resource combination, and this is not limited in this application. It may be understood that the uplink frequency domain resource and the downlink frequency domain resource may be located on a same carrier or different carriers.

2. A downlink frequency resource of a frequency domain resource pair or a frequency domain resource combination.

3. A supplementary uplink carrier (supplementary UL CC, SUL CC). The SUL CC is a frequency resource used by the communications apparatus to perform uplink transmission. Specifically, the SUL CC is at least one of the following: an SUL CC not of a frequency domain resource pair or a frequency domain resource combination, an SUL CC having no downlink frequency resource that has a predefined correspondence with the supplementary uplink carrier in an NR system, or an SUL CC having a corresponding downlink frequency domain resource that the communications apparatus does not need to simultaneously use. A scenario in which LTE and the NR coexist in a 5G mobile communications system is used as an example, the SUL CC may be used in any one of the following cases: NR uplink transmission instead of NR downlink transmission, that there is no downlink frequency resource having a predefined pairing relationship with the SUL CC in the NR, or that a downlink frequency resource having a predefined pairing relationship with the carrier is used for the LTE instead of the NR.

In the CA scenario of the NR, a carrier type includes a primary component carrier (primary component carrier, PCC) and a secondary component carrier (secondary component carrier, SCC).

The PCC is a component carrier (component carrier, CC) corresponding to a primary cell (primary cell, Pcell). The Pcell is a cell that the communications apparatus accesses during initial connection establishment, or a cell that the communications apparatus accesses during radio resource control (radio resource control, RRC) connection reestablishment, or a primary cell specified in a handover (handover) process, and is responsible for RRC communication between the network device and the communications apparatus. Specifically, CCs corresponding to the Pcell include an uplink PCC (uplink PCC, UL PCC) and a downlink PCC (downlink PCC, DL PCC).

The SCC is a CC corresponding to a secondary cell (secondary cell, Scell). The Scell is added during RRC reconfiguration and does not have RRC communication with the network device. In the NR, a CC corresponding to the Scell includes but is not limited to the following types:
(1) A pair of a DL SCC and a UL SCC;
(2) ADL SCC;
(3) An SUL CC;
(4) An SUL CC and a DL SCC; and
(5) An SUL CC, a DL SCC, and a UL SCC.

It should be understood that the foregoing five types are merely used as examples, and are not intended to limit this application.

In the CA scenario of the NR, the NR supports cross-carrier scheduling, cross-carrier feedback, and carrier activation and deactivation. The cross-carrier scheduling, the cross-carrier feedback, and the carrier activation and deactivation are separately described below.
(1) That the NR supports cross-carrier scheduling means that when the network device schedules an uplink carrier based on a downlink carrier, the communications apparatus may detect scheduling information of the uplink carrier on the downlink carrier. The scheduling information indicates a time-frequency resource corresponding to the uplink carrier. Then the communications apparatus may communicate with the network device on the uplink carrier based on the time-frequency resource corresponding to the uplink carrier. For example, the communications apparatus may send a measurement report, user data, and the like to the network device on the uplink carrier.
   For another example, the communications apparatus may obtain, by monitoring a physical downlink control channel (physical downlink control channel, PDCCH) on a CC1 (a downlink carrier), information that a CC2 (an uplink carrier) is scheduled. The communications apparatus may communicate with the network device on the CC2.
(2) That the NR supports cross-carrier feedback means that after receiving data on different downlink carriers in a PUCCH group, the communications apparatus feeds back an acknowledgement (acknowledgement, ACK) or a negative acknowledgement (negative acknowledgement, NACK) on a same uplink carrier in the PUCCH group. The uplink carrier has a physical uplink control channel (physical uplink control channel, PUCCH).
   It should be noted that, that the uplink carrier has a PUCCH means that a time-frequency resource corresponding to the PUCCH is a part of a time-frequency resource corresponding to the uplink carrier.
   Specifically, if a PUCCH group includes a UL PCC, the PUCCH group is referred to as a primary PUCCH group (Primary PUCCH group), and the UL PCC has a PUCCH, while a PUCCH group that does not include a UL PCC is referred to as a secondary PUCCH group (Secondary PUCCH group).
(3) The NR supports the carrier activation and deactivation.

Due to a limitation of terminal transmit power, uplink coverage and downlink coverage are usually unbalanced, and the uplink coverage is smaller than the downlink coverage. In addition, with introduction of a high frequency band, an imbalance between the uplink coverage and the downlink coverage is more obvious. In addition, from a service perspective, downlink service requirements are usually more than uplink service requirements. Therefore, there is also an imbalance between the uplink service requirements and the downlink service requirements. The NR supports a supplementary uplink carrier (supplementary UL CC, SUL CC), and the SUL CC is proposed to resolve the imbalance between the uplink coverage and the downlink coverage or the imbalance between uplink services and downlink services through uplink and downlink decoupling. The uplink and downlink decoupling means that an uplink CC and a downlink CC may be independently configured. Therefore, an uplink carrier and a downlink carrier used to schedule the uplink carrier do not need to be simultaneously activated or deactivated. In the NR, when a downlink carrier used to schedule an SUL CC is in a deactivated state, the SUL CC may be in an activated state. This carrier type is supported in the NR, and therefore, activation and deactivation of this type of carrier needs to be considered.

It should be understood that the communications apparatus in the embodiments of this application may be a terminal device or a chip. For example, the chip may be located in the terminal device, for example, a processing chip of the terminal device. For another example, the terminal device may be user equipment (user equipment, UE), an access terminal, a terminal unit, a terminal station, a mobile station, a mobile, a remote station, a remote terminal, a mobile device, a wireless communications device, a terminal agent, a terminal apparatus, or the like in an NR system or an evolved PLMN in the future. The access terminal may be a cellular phone, a cordless phone, a session initiation protocol (Session Initiation Protocol, SIP) phone, a wireless local loop (wireless local loop, WLL) station, a personal digital assistant (personal digital assistant, PDA), a handheld device or a computing device having a wireless communication function, another processing device connected to a wireless modem, an in-vehicle device, a wearable device, or the like. This is not specifically limited in the embodiments of this application.

The network device in the embodiments of this application is an access device that connects a terminal device to a mobile communications system in a wireless manner, and may be a base station (NodeB), an evolved NodeB (eNodeB), a base station in a 5G mobile communications system, a base station in a future mobile communications system, or an access node in a Wi-Fi system. A specific technology used by the network device and a specific device form are not limited in the embodiments of this application.

The following describes the embodiments of this application with reference to the accompanying drawings.

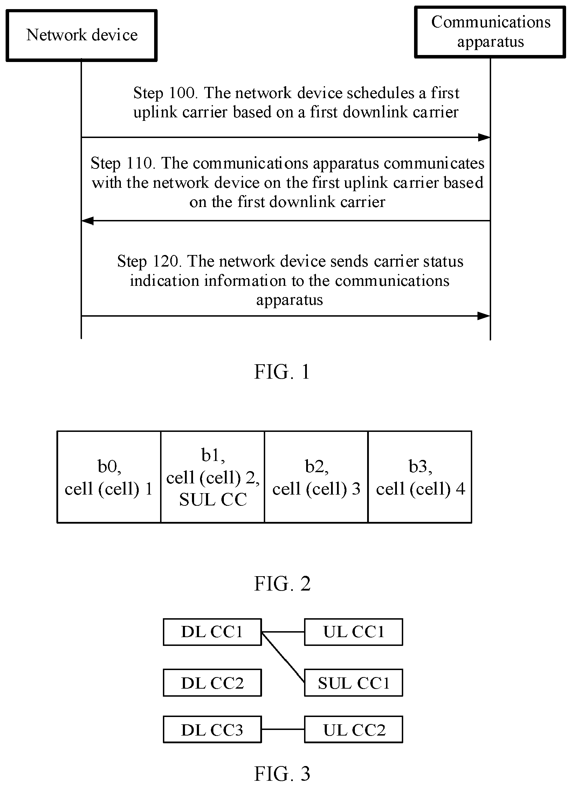

Referring to FIG. 1, this application provides a carrier status indication method. The method includes the following steps.

Step 100. A network device schedules a first uplink carrier based on a first downlink carrier.

The network device sends scheduling information of the first uplink carrier to a communications apparatus on the first downlink carrier, and the scheduling information indicates a time-frequency resource corresponding to the first uplink carrier. In this case, both the first downlink carrier and the first uplink carrier are in an activated state.

Step 110. The communications apparatus communicates with the network device on the first uplink carrier based on the first downlink carrier.

The communications apparatus sends, based on the scheduling information of the first uplink carrier received on the first downlink carrier, uplink information to the network device on the first uplink carrier. The uplink information may be uplink data or uplink control information.

It should be noted that step 100 and step 110 are optional steps, and the network device may determine, depending on an actual situation, whether to schedule the first uplink carrier based on the first downlink carrier.

Step 120. The network device sends carrier status indication information to the communications apparatus, where the carrier status indication information indicates carrier statuses of M carriers corresponding to N cells that serve the communications apparatus, the carrier status includes an activated state and a deactivated state, and both N and M are positive integers.

It should be understood that the N cells that serve the communications apparatus in this application may be Scells.

In this application, the carrier status indication information may indicate that the first downlink carrier is in a deactivated state and that the first uplink carrier is in an activated state, and both the first downlink carrier and the first uplink carrier are carriers of the M carriers. For example, CCs corresponding to an Scell include an SUL CC and a DL SCC, and when both the DL SCC and the SUL CC are in an activated state, the communications apparatus may communicate with the network device on the SUL CC based on the DL SCC. The carrier status indication information may indicate that the SUL CC is in an activated state and that the DL SCC is in a deactivated state, in other words, only the DL SCC is deactivated, while the SUL CC is not deactivated. Therefore, the foregoing carrier status indication method can support uplink and downlink decoupling, so that a carrier status of an uplink carrier does not rely on a carrier status of a downlink carrier.

It should be noted that the carrier status indication information may indicate, in a bitmap manner (bitmap), the carrier statuses of the M carriers corresponding to the N cells that serve the communications apparatus. The carrier status indication information may be sent by the network device to the communications apparatus by using downlink control information (Downlink Control Information, DCI) or a MAC-CE.

The carrier status indication information may indicate the carrier statuses of the M carriers corresponding to the N cells that serve the communications apparatus in a manner that includes but is not limited to the following four manners.

Manner 1. The carrier status indication information indicates carrier statuses of an uplink carrier and a downlink carrier that are corresponding to each of the N cells that serve a terminal.

In Manner 1, the carrier status of the uplink carrier corresponding to each cell may be separately configured to an activated state or a deactivated state, and the carrier status of the downlink carrier corresponding to each cell may be separately configured to an activated state or a deactivated state. When the carrier status indication information indicates, in a bitmap manner, the carrier statuses of the M carriers corresponding to the N cells that serve the communications apparatus, specifically, there may be the following two cases:
(1) Each cell corresponds to two bits. The two bits correspond to the carrier status of the uplink carrier and the carrier status of the downlink carrier. In this case, the carrier status of the uplink carrier corresponding to each cell is uniformly indicated, and the carrier status of the downlink carrier corresponding to each cell is uniformly indicated.
(2) Each uplink carrier that is corresponding to each cell corresponds to one bit, and each downlink carrier that is corresponding to each cell corresponds to one bit.

In addition, a carrier status of a CC corresponding to a cell that does not include an SUL CC may be further limited. For example, it cannot be indicated that a UL CC of the CC corresponding to the cell that does not include an SUL CC is in an activated state and that a DL CC is in a deactivated state.

Therefore, flexible and independent configuration of carrier statuses of carriers can be implemented in the foregoing Manner 1. However, with reference to the CC corresponding to the Scell, some Scells may correspond to only one SUL CC or one DL SCC. If each cell corresponds to two bits, and therefore, resource waste may be caused in Manner 1. Alternatively, CCs corresponding to at least two Scells may include a same DL SCC. Therefore, a carrier status of the DL SCC may be repeatedly indicated, and resource waste is also caused.

Manner 2. The carrier status indication information indicates a carrier status of each of the M carriers.

In Manner 2, the carrier status of each carrier may be separately configured to an activated state or a deactivated state. Therefore, when the carrier status indication information indicates, in a bitmap manner, the carrier statuses of the M carriers corresponding to the N cells that serve the communications apparatus, each carrier corresponds to one bit. For example, 1 indicates that a carrier status is an activated state, and 0 indicates that a carrier status is a deactivated state.

In Manner 2, a DL SCC can be in a deactivated state, and a SUL CC can be in an activated state; or a DL SCC can be in an activated state, and a UL SCC paired with the DL SCC can be in a deactivated state.

Therefore, it can be ensured in Manner 2 that the carrier status of each carrier is accurately indicated, and compared with Manner 1, resource waste can be avoided and signaling overheads are reduced in Manner 2.

Manner 3. The N cells that serve the communications apparatus are classified into three types: (1) a cell that includes a preset-type uplink carrier and at least one carrier other than the preset-type uplink carrier. (2) a cell that includes only a preset-type uplink carrier, and (3) a cell that does not include a preset-type uplink carrier.

If carriers corresponding to a first cell of the N cells that serve the communications apparatus include a preset-type uplink carrier and at least one carrier other than the preset-type uplink carrier, that is, the first cell is a type (1) cell, the carrier status indication information may indicate carrier statuses of the carriers corresponding to the first cell in a manner that includes but is not limited to the following manners:
Manner A. The carrier status indication information indicates a carrier status of the preset-type uplink carrier corresponding to the first cell and a carrier status of the at least one carrier, other than the preset-type uplink carrier, corresponding to the first cell. In this case, the carrier status of the at least one carrier, other than the preset-type uplink carrier, corresponding to the first cell may be uniformly indicated, or a carrier status of the at least one carrier other than the preset-type uplink carrier may be separately indicated.
Manner B. The carrier status indication information indicates a carrier status of an uplink carrier corresponding to the first cell, and a carrier status of a downlink carrier corresponding to the first cell.

If a carrier corresponding to a second cell of the N cells that serve the communications apparatus includes only a preset-type uplink carrier, that is, the second cell is a type (2) cell, the carrier status indication information indicates a carrier status of the preset-type uplink carrier corresponding to the second cell.

If a carrier corresponding to a third cell of the N cells that serve the communications apparatus does not include a preset-type uplink carrier, that is, the third cell is a type (3) cell, the carrier status indication information indicates carrier statuses of all carriers corresponding to the third cell. The carrier statuses of all the carriers corresponding to the third cell are uniformly indicated.

The preset-type uplink carrier herein may be an SUL CC. The following uses the SUL CC as an example for description.

In Manner 3, when the carrier status indication information indicates, in a bitmap manner, the carrier statuses of the M carriers corresponding to the cells that serve the communications apparatus, two bits are used for indication in the first cell. One bit indicates a carrier status of an SUL CC corresponding to the first cell, and the other bit indicates a carrier status of at least one carrier, other than the SUL CC, corresponding to the first cell.

For example, if Manner A is used for indication, when the CCs for the first cell are type (4) of the CC corresponding to the Scell, one bit indicates a carrier status of the SUL CC, and the other bit indicates a carrier status of the DL SCC. When the CCs for the first cell are type (5) of the CC corresponding to the Scell, one bit indicates a carrier status of the SUL CC, and the other bit indicates a carrier status of the DL SCC and a carrier status of the UL SCC. For example, 1 indicates that both the carrier status of the DL SCC and the carrier status of the UL SCC are activated states, and 0 indicates that both the carrier status of the DL SCC and the carrier status of the UL SCC are deactivated states.

For another example, if Manner B is used for indication, when the CCs for the first cell are type (4) of the CC corresponding to the Scell, one bit indicates a carrier status of the SUL CC, and the other bit indicates a carrier status of the DL SCC. When the CCs for the first cell are type (5) of the CC corresponding to the Scell, one bit indicates a carrier status of the DL CC, and the other bit indicates a carrier status of the SUL CC and a carrier status of the UL SCC. For example, 1 indicates that the carrier status of the UL SCC is a deactivated state, and the carrier status of the SUL SCC is an activated state, and 0 indicates that the carrier status of the SUL SCC is a deactivated state, and the carrier status of the UL SCC is an activated state.

One bit is used for indication in the second cell, and the one bit indicates a carrier status of an SUL CC corresponding to the second cell. For example, the CC for the second cell may be type (3) of the CC corresponding to the Scell. One bit is used for indication in the third cell, and the one bit indicates carrier statuses of all carriers corresponding to the third cell. For example, the CC for the third cell may be type (1) or type (2) of the CC corresponding to the Scell.

For example, the network device notifies, to the communications apparatus in advance, a CC corresponding to each of four cells that serve the communications apparatus. CCs corresponding to a cell 1 include a DL CC1 and a UL CC1, and when both the DL CC1 and the UL CC1 are in an activated state, the DL CC1 is used to schedule the UL CC1. A CC corresponding to a cell 2 includes an SUL CC1. A CC corresponding to a cell 3 includes a DL CC2. CCs corresponding to a cell 4 include a DL CC3 and a UL CC2, and when both the DL CC3 and the UL CC2 are in an activated state, the DL CC3 is used to schedule the UL CC2. If the foregoing Manner 3 is used for indication, and the preset-type uplink carrier is an SUL CC, one bit may be used to perform indication for the CC corresponding to the cell 3 of the foregoing four cells, because similar to the CC for the second cell in Manner 3, the CC corresponding to the cell 3 includes only an SUL CC, as shown in FIG. 2.

Therefore, signaling overheads can be effectively reduced in Manner 3.

Manner 4. The carrier status indication information indicates a carrier status of each downlink carrier of the M carriers and a carrier status of each preset-type uplink carrier of the M carriers.

The preset-type uplink carrier may be an SUL CC.

In Manner 4, when the carrier status indication information indicates, in a bitmap manner, the carrier statuses of the M carriers corresponding to the N cells that serve the communications apparatus, each downlink carrier of the M carriers corresponds to one bit, and each preset-type uplink carrier corresponds to one bit. In this case, indication is not performed for an uplink carrier, other than the preset-type uplink carrier, paired with a downlink carrier, and a carrier status of the uplink carrier is the same as a carrier status of the paired downlink carrier.

The following specifically describes the foregoing four manners with reference to different implementations.

The network device notifies, to the communications apparatus in advance, a CC corresponding to each of four cells that serve the communications apparatus. As shown in FIG. 3, CCs corresponding to a cell 1 include a DL CC1 and a UL CC1, and when both the DL CC1 and the UL CC1 are in an activated state, the DL CC1 is used to schedule the UL CC1. CCs corresponding to a cell 2 include the DL CC1 and an SUL CC1, and when both the DL CC1 and the SUL CC1 are in an activated state, the DL CC1 is used to schedule the SUL CC1. A CC corresponding to a cell 3 includes a DL CC2. CCs corresponding to a cell 4 include a DL CC3 and a UL CC2, and when both the DL CC3 and the UL CC2 are in an activated state, the DL CC3 is used to schedule the UL CC2.

The network device generates the carrier status indication information in a bitmap manner in which 1 indicates that a carrier status is an activated state, and 0 indicates that a carrier status is a deactivated state.

### Implementation 1:

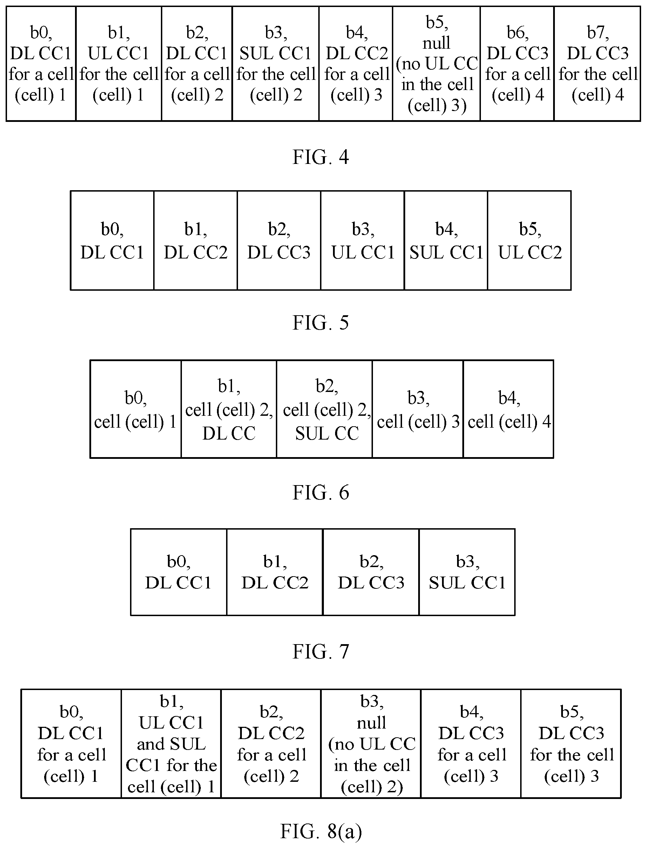

As shown in FIG. 4, if the foregoing Manner 1 is used for indication, the carrier indication information needs to occupy eight bits. Each cell corresponds to two bits, and the two bits correspond to a carrier status of an uplink carrier and a carrier status of a downlink carrier.

A carrier status of the DL CC1 is indicated twice. The CC corresponding to the cell 3 includes only the DL CC2, but two bits are still occupied.

### Implementation 2:

As shown in FIG. 5, if the foregoing Manner 2 is used for indication, the carrier indication information needs to occupy six bits because the four cells correspond to six CCs. Each bit corresponds to a carrier status of one carrier.

### Implementation 3:

As shown in FIG. 6, if the foregoing Manner 3 is used for indication, and the preset-type uplink carrier is an SUL CC, one bit may be used for indication because the CCs corresponding to the cell 1 of the foregoing four cells do not include an SUL CC. When the bit indicates 1, all the CCs (that is, the DL CC1 and the UL CC1) corresponding to the cell 1 are in an activated state. When the bit indicates 0, all the CCs (that is, the DL CC1 and the UL CC1) corresponding to the cell 1 are in a deactivated state. The CCs corresponding to the cell 2 include the SUL CC1 and the DL CC1, and therefore, two bits need to be used to indicate carrier statuses of the DL CC1 and the SUL CC1 that are corresponding to the cell 2. Similarly, none of the CC corresponding to the cell 3 and the CCs corresponding to the cell 4 includes an SUL CC. Therefore, one bit is used to perform indication for the CC corresponding to the cell 3, and one bit is used to perform indication for the CCs corresponding to the cell 4.

It can be learned from the foregoing that the carrier status indication information needs to occupy a total of five bits. Therefore, using the foregoing Manner 3 for indication can reduce signaling overheads.

### Implementation 4:

As shown in FIG. 7, if the foregoing Manner 4 is used for indication, because the foregoing four cells correspond to six CCs: three DL CCs, one SUL CC, and two UL CCs, the carrier indication information needs to occupy four bits. The four bits correspond to the three DL CCs and the one SUL CC. A carrier status of the UL CC1 is the same as that of the DL CC1, a carrier status of the UL CC2 is the same as that of the DL CC3, and no bit is occupied for separate indication. Therefore, using the foregoing Manner 4 for indication can also reduce signaling overheads.

The following specifically describes Manner 1 and Manner 3 with reference to different implementations.

The network device notifies, to the communications apparatus in advance, a CC corresponding to each of three cells that serve the communications apparatus. CCs corresponding to a cell 1 include a DL CC1, a UL CC1, and an SUL CC1. When both the DL CC1 and the UL CC1 are in an activated state and the SUL CC1 is in a deactivated state, the DL CC1 is used to schedule the UL CC1. When both the DL CC1 and the SUL CC1 are in an activated state and the UL CC1 is in a deactivated state, the DL CC1 is used to schedule the SUL CC1. When the DL CC1, the SUL CC1, and the UL CC1 are in an activated state, the DL CC1 is used to schedule the SUL CC1 and the UL CC1.

A CC corresponding to a cell 2 includes a DL CC2. CCs corresponding to a cell 3 include a DL CC3 and a UL CC2. When both the DL CC3 and the UL CC2 are in an activated state, the DL CC3 is used to schedule the UL CC2.

### Implementation 1:

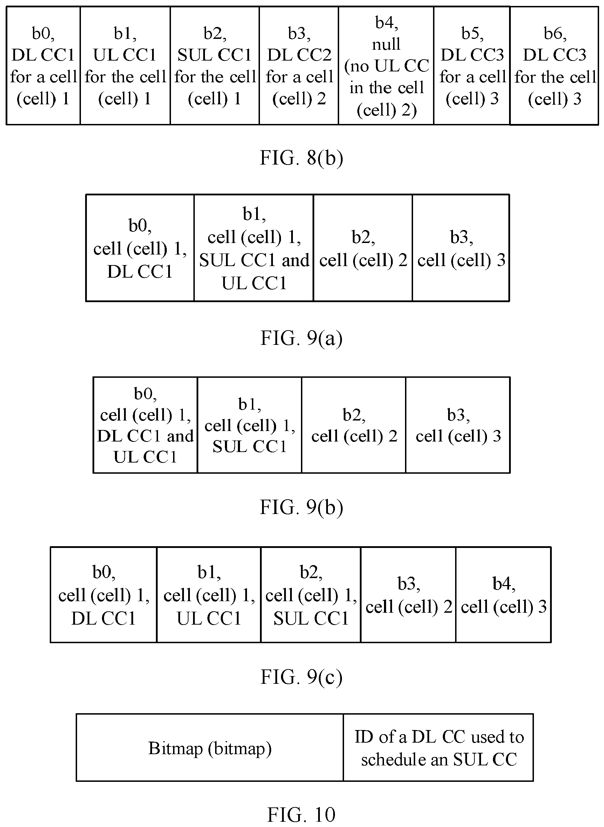

As shown in FIG. 8(a), if the foregoing Manner 1 is used for indication, the carrier indication information needs to occupy six bits. Each cell corresponds to two bits, and the two bits correspond to a carrier status of an uplink carrier and a carrier status of a downlink carrier. One bit indicates a carrier status of the UL CC1 and a carrier status of the SUL CC1.

### Implementation 2:

As shown in FIG. 8(a), if the foregoing Manner 1 is used for indication, the carrier indication information needs to occupy seven bits. A quantity of bits corresponding to each cell is determined by a quantity of CCs corresponding to each cell, and at least two bits are occupied. The CCs corresponding to the cell 1 includes three CCs, and three bits are occupied. The CC corresponding to the cell 2 includes only the DL CC2, but two bits are still occupied. The CC corresponding to the cell 3 includes two CCs, and two bits are occupied.

### Implementation 3:

As shown in FIG. 9(a), if Manner B in the foregoing Manner 3 is used for indication, the carrier indication information needs to occupy four bits, and the cell 2 and the cell 3 each correspond to one bit. The DL CC1 of the CCs corresponding to the cell corresponds to one bit. The SUL CC1 and the UL CC1 correspond to one bit, 0 indicates that the SUL CC1 is in a deactivated state and that the UL CC1 is in an activated state, and 1 indicates that the SUL CC1 is in an activated state and that the UL CC1 is in a deactivated state. Further, an association relationship between content indicated by b0 and content indicated by b1 may be specified. For example, b0=1 and b1=0 mean that the DL CC1 is in an activated state, that the SUL CC1 is in a deactivated state, and that the UL CC1 is in an activated state.

### Implementation 4:

As shown in FIG. 9(b), if Manner A in the foregoing Manner 3 is used for indication, the carrier indication information needs to occupy four bits, and the cell 2 and the cell 3 each correspond to one bit. The SUL CC1 of the CCs corresponding to the cell corresponds to one bit. The DL CC1 and the UL CC1 correspond to one bit, 0 indicates that the DL CC1 is in a deactivated state and that the UL CC1 is in a deactivated state, and 1 indicates that the DL CC1 is in an activated state and that the UL CC1 is in a deactivated state. Further, an association relationship between content indicated by b0 and content indicated by b1 may be specified. For example, b0=0 and b1=1 mean that the SUL CC1 is in a deactivated state, that the DL CC1 is in an activated state, and that the UL CC1 is in an activated state.

### Implementation 5:

As shown in FIG. 9(b), if Manner A in the foregoing Manner 3 is used for indication, the carrier indication information needs to occupy five bits, and the cell 2 and the cell 3 each correspond to one bit. The SUL CC1 of the CCs corresponding to the cell corresponds to one bit, the DL CC1 corresponds to one bit, and the UL CC1 corresponds to one bit, that is, CCs for a cell including an SUL CC are indicated separately.

It may be learned by comparing the foregoing Manner 1 and Manner 3 that signaling overheads can be effectively reduced in Manner 3.

Further, when the first downlink carrier is in a deactivated state, and the first uplink carrier is in an activated state, how to configure a new downlink carrier used to schedule the first uplink carrier for the first uplink carrier also needs to be considered. For example, assuming that the first uplink carrier is an SUL CC, when a downlink carrier used to schedule the SUL CC is in a deactivated state, and the SUL CC is in an activated state, how to configure a new downlink carrier used to schedule the SUL CC for the SUL CC also needs to be considered.

Therefore, the communications apparatus needs to determine a second downlink carrier used to schedule the first uplink carrier. The communications apparatus may determine the second downlink carrier in a manner that includes but is not limited to the following two manners:

Manner 1: The communications apparatus determines the second downlink carrier based on a downlink carrier of the M carriers and first indication information, where the carrier status indication information indicates that the downlink carrier is in an activated state. The first indication information is predefined or preconfigured, and the first indication information is used to indicate a priority of a downlink carrier used to schedule the first uplink carrier.

That the first indication information is predefined means that the first indication information is specified by a communication protocol, and that the network device does not need to notify the communications apparatus of the first indication information. That the first indication information is preconfigured means that the first indication information needs to be notified by the network device to the communications apparatus in advance.

For example, the first indication information indicates a priority sequence of downlink carriers used to schedule the first uplink carrier are a downlink carrier 1, a downlink carrier 3, and a downlink carrier 4. The communications apparatus determines the downlink carrier in an activated state based on the carrier status indication information. If the downlink carrier 1 is in an activated state, the communications apparatus determines the downlink carrier 1 as the second downlink carrier. If the downlink carrier 1 is in a deactivated state, and both the downlink carrier 3 and the downlink carrier 4 are in an activated state, the communications apparatus determines the downlink carrier 3 as the second downlink carrier based on the priority sequence.

Manner 2: The second downlink carrier is predefined, or the second downlink carrier is directly notified by the network device to the communications apparatus, and the communications apparatus may directly determine the second downlink carrier.

In a possible design, the second downlink carrier is a DL PCC.

In a possible design, the carrier indication information further includes a carrier identifier of the downlink carrier used to schedule the first uplink carrier, that is, a carrier identifier of the second downlink carrier. For example, as shown in FIG. 10, the carrier indication information includes a carrier identifier of a downlink carrier (DL CC ID) used to schedule an SUL CC.

A length of a bit occupied by a carrier identifier may be fixed. For example, four bits are occupied to indicate the carrier identifier of the second downlink carrier.

Alternatively, a length of a bit occupied by a carrier identifier may be determined based on a quantity of DL CCs currently in an activated state. For example, when there are four DL CCs currently in an activated state, two bits may be used to indicate the carrier identifier of the second downlink carrier.

In a possible design, when the carrier status indication information is sent to the communications apparatus by using a MAC-CE, the carrier indication information further includes a carrier identifier of the downlink carrier used to schedule the first uplink carrier. For example, the carrier status indication information further includes a carrier identifier of a new DL CC, used to schedule an SUL CC, configured for the SUL CC. When the carrier status indication information is sent to the communications apparatus by using DCI, the carrier indication information does not include a carrier identifier of the downlink carrier used to schedule the first uplink carrier. For example, the carrier status indication information does not include a carrier identifier of a new DL CC, used to schedule an SUL CC, configured for the SUL CC. In this case, the DL CC used to schedule the SUL CC may be determined in the another manner.

After determining the second downlink carrier, the communications apparatus may communicate with the network device on the first uplink carrier based on the second downlink carrier.

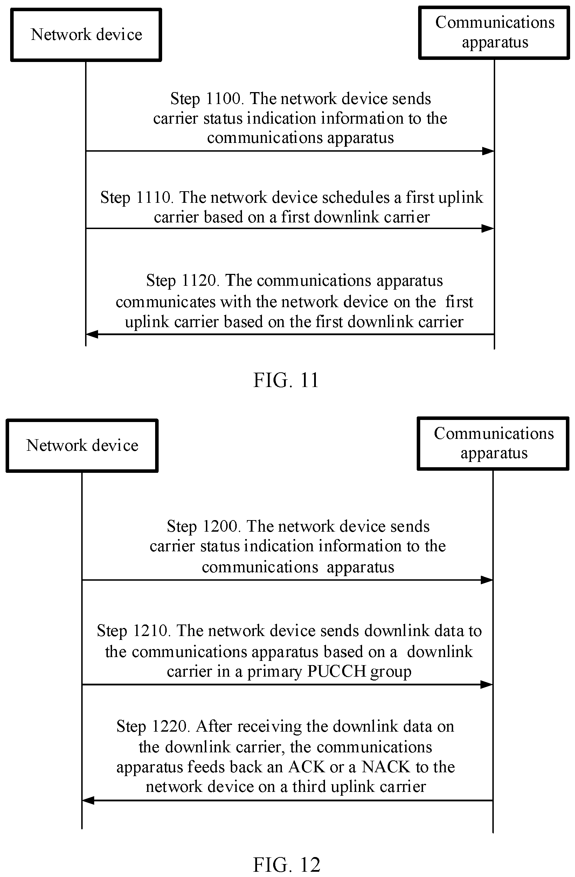

Referring to FIG. 11, this application provides a carrier status indication method. The method includes the following steps.

Step 1100. A network device sends carrier status indication information to a communications apparatus, where the carrier status indication information indicates carrier statuses of M carriers corresponding to N cells that serve the communications apparatus, the carrier status includes an activated state and a deactivated state, and both N and M are positive integers.

The carrier status indication information indicates that a first uplink carrier is in an activated state, and after the network device sends the carrier status indication information to the communications apparatus, the first uplink carrier is switched from a deactivated state to an activated state.

For example, CCs corresponding to an Scell include an SUL CC and a DL SCC. Before the communications apparatus receives the carrier status indication information, the SUL CC is in a deactivated state, the carrier status indication information may indicate that the SUL CC is in an activated state, and that a carrier status of the DL SCC may be an activated state or a deactivated state. Therefore, uplink and downlink decoupling can be supported in the foregoing carrier status indication method, so that a carrier status of an uplink carrier does not rely on a carrier status of a downlink carrier.

The carrier status indication information may indicate the carrier statuses of the M carriers corresponding to the N cells that serve the communications apparatus in a manner that includes but is not limited to the four manners provided in the embodiment shown in FIG. 1. Details are not described herein again.

Step 1110. The network device schedules a first uplink carrier based on a first downlink carrier.

The network device sends scheduling information of the first uplink carrier to the communications apparatus on the first downlink carrier, and the scheduling information indicates a time-frequency resource corresponding to the first uplink carrier.

Step 1120. The communications apparatus communicates with the network device on the first uplink carrier based on the first downlink carrier.

The communications apparatus sends, based on the scheduling information of the first uplink carrier received on the first downlink carrier, uplink information to the network device on the first uplink carrier, and the uplink information may be uplink data or uplink control information.

Step 1110 and step 11120 are optional steps. If the communications apparatus needs to perform step 1110 and step 1120, the first downlink carrier used to schedule the first uplink carrier needs to be determined. It should be understood that the communications apparatus may determine the first downlink carrier by using the method for determining the second downlink carrier by the communications apparatus in the embodiment shown in FIG. 1. Details are not described again.

In a possible design, first indication information indicates that a priority of a downlink carrier used to schedule the first uplink carrier last time when the first uplink carrier is in an activated state is higher than a priority of a DL PCC.

For example, the first indication information indicates that a priority of a downlink carrier used to schedule an SUL CC last time when the SUL CC in an activated state is higher than the priority of the DL PCC. It is assumed that the downlink carrier used to schedule the SUL CC last time when the SUL CC is in an activated state is a DL CC1. If the carrier status indication information indicates that the SUL CC is in an activated state, and that the DL CC1 is also in an activated state, the communications apparatus determines that the first downlink carrier is the DL CC1. If the carrier status indication information indicates that the DL CC1 is in a deactivated state, the communications apparatus determines that the first downlink carrier is a DL PCC.

It can be learned with reference to the embodiments shown in FIG. 1 and FIG. 11 that compared with the prior art, carrier activation and deactivation is performed based on an Scell, in other words, activating or deactivating a CC corresponding to an Scell is activating or deactivating a pair of a DL SCC and a UL SCC, or activating or deactivating one DL SCC, uplink and downlink decoupling can be supported in the method provided in the embodiments of this application, so that the carrier status of the uplink carrier does not rely on the carrier status of the downlink carrier, and activation and deactivation of the uplink carrier and the downlink carrier can be flexibly and independently configured.

In addition to the SUL CC, there is another new scenario of activation and deactivation in NR. In LTE, in a primary PUCCH group, a UL PCC has a PUCCH, and the UL PCC cannot be deactivated. Therefore, a UL CC having a PUCCH in the primary PUCCH group cannot be deactivated. In the NR, in a primary PUCCH group, a UL CC having a PUCCH may be another UL CC other than a UL PCC. Therefore, there is a possibility that the UL CC having a PUCCH is deactivated. Therefore, how to configure a new UL CC having a PUCCH also needs to be considered.

Referring to FIG. 12, this application further provides a carrier status indication method, where the method includes the following steps.

Step 1200. A network device sends carrier status indication information to a communications apparatus, where the carrier status indication information indicates carrier statuses of M carriers corresponding to N cells that serve the communications apparatus, the carrier status includes an activated state and a deactivated state, and both N and M are positive integers.

The carrier status indication information indicates that a second uplink carrier is in a deactivated state, the second uplink carrier has a PUCCH, the second uplink carrier is a carrier of the M carriers, and the second uplink carrier is a carrier in a primary PUCCH group.

Therefore, there is a possibility that a UL CC having a PUCCH in the primary PUCCH group is deactivated.

The carrier status indication information may indicate the carrier statuses of the M carriers corresponding to the N cells that serve the communications apparatus in a manner that includes but is not limited to the four manners provided in the embodiment shown in FIG. 1. Details are not described herein again.

Further, the carrier status indication information indicates that a third uplink carrier of the M carriers is in an activated state, the third uplink carrier has a PUCCH, and the third uplink carrier is a carrier in the primary PUCCH group.

Similar to determining the second downlink carrier by the communications apparatus in the embodiment shown in FIG. 1, the communications apparatus may determine the third uplink carrier in a manner that includes but is not limited to the following two manners.

Manner 1. The communications apparatus determines the third uplink carrier based on an uplink carrier of the M carriers and second indication information, where the carrier status indication information indicates that the uplink carrier is in an activated state. The second indication information is predefined or preconfigured, and the second indication information is used to indicate a priority of an uplink carrier having a PUCCH.

For example, the first indication information indicates that a priority sequence of uplink carriers having a PUCCH are an uplink carrier 1, an uplink carrier 3, and an uplink carrier 4. The communications apparatus determines the uplink carrier in an activated state based on the carrier status indication information. If the uplink carrier 1 is in an activated state, the communications apparatus determines the uplink carrier 1 as the third uplink carrier. If the uplink carrier 1 is in a deactivated state, and both the uplink carrier 3 and the uplink carrier 4 are in an activated state, the communications apparatus determines the uplink carrier 3 as the third uplink carrier based on the priority sequence.

Manner 2. The third uplink carrier is predefined, or the third uplink carrier is directly notified by the network device to the communications apparatus, and the communications apparatus may directly determine the second downlink carrier.

In a possible design, the third uplink carrier is a UL PCC.

In a possible design, the carrier indication information further includes a carrier identifier of the uplink carrier having a PUCCH, that is, a carrier identifier of the third uplink carrier.

A length of a bit occupied by a carrier identifier may be fixed. For example, four bits are occupied to indicate the carrier identifier of the third uplink carrier.

Alternatively, a length of a bit occupied by a carrier identifier may be determined based on a current quantity of UL CCs in an activated state. For example, when there are currently four UL CCs in an activated state, two bits may be used to indicate the carrier identifier of the third uplink carrier.

In a possible design, when the carrier status indication information is sent to the communications apparatus by using a MAC-CE, the carrier status indication information further includes a carrier identifier of a newly configured uplink carrier having a PUCCH. When the carrier status indication information is sent to the communications apparatus by using DCI, the carrier status indication information does not include a carrier identifier of a newly configured uplink carrier having a PUCCH. The uplink carrier having a PUCCH may be determined in the another manner.

Step 1210. The network device sends downlink data to the communications apparatus based on a downlink carrier in the primary PUCCH group.

A carrier status of the downlink carrier is an activated state, and may be learned of from the foregoing carrier status indication information.

Step 1220. After receiving the downlink data on the downlink carrier, the communications apparatus feeds back an ACK or a NACK to the network device on the third uplink carrier.

It should be noted that step 1210 and step 1220 are optional steps, and the network device may determine, based on an actual service status, whether to send the downlink data to the communications apparatus based on the downlink carrier in the primary PUCCH group.

Based on the foregoing embodiments, an embodiment of this application provides a carrier status indication apparatus. For example, the carrier status indication apparatus is a terminal device, a chip, or the like.

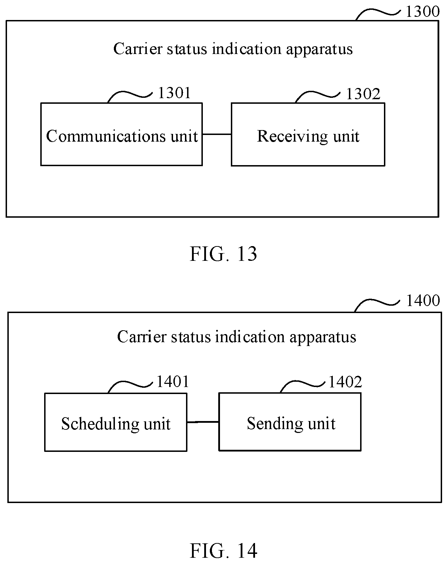

Referring to FIG. 13, the carrier status indication apparatus 1300 includes a communications unit 1301 and a receiving unit 1302.

The communications unit 1301 is configured to communicate with a network device on a first uplink carrier based on a first downlink carrier.

The receiving unit 1302 is configured to receive carrier status indication information sent by the network device, where the carrier status indication information indicates carrier statuses of M carriers corresponding to N cells that are of the network device and that serve a communications apparatus, the carrier status includes an activated state and a deactivated state, and both N and M are positive integers, where the carrier status indication information indicates that the first downlink carrier is in a deactivated state and that the first uplink carrier is in an activated state, and both the first downlink carrier and the first uplink carrier are carriers of the M carriers.

It may be understood that for details about specific implementations and corresponding beneficial effects of functional modules of the carrier status indication apparatus in FIG. 13, refer to the specific description of the foregoing embodiment of FIG. 1. Details are not described herein again.

Based on the foregoing embodiments, an embodiment of this application provides a carrier status indication apparatus. For example, the carrier status indication apparatus is a network device, a base station, or the like.

Referring to FIG. 14, the carrier status indication apparatus 1400 includes a scheduling unit 1401 and a sending unit 1402.

The scheduling unit 1401 is configured to schedule a first uplink carrier based on a first downlink carrier.

The sending unit 1402 is configured to send carrier status indication information, where the carrier status indication information indicates carrier statuses of M carriers corresponding to N cells that are of the network device and that serve a communications apparatus, the carrier status includes an activated state and a deactivated state, and both N and M are positive integers.

It may be understood that for details about specific implementations and corresponding beneficial effects of functional modules of the carrier status indication apparatus in FIG. 14, refer to the specific description of the foregoing embodiment of FIG. 1. Details are not described herein again.

It should be understood that division of the foregoing units is merely logical function division. All or some of the units may be integrated into a physical entity in actual implementation, or may be physically separated. In addition, all the units may be implemented in a form of software invoked by a processing element, or may be implemented in a form of hardware; or some units are implemented in a form of software invoked by a processing element, and some units are implemented in a form of hardware. In an implementation process, steps of the foregoing method or the foregoing units may be implemented by using an integrated logic circuit of hardware of the processor element, or by using an instruction in a form of software. In addition, the foregoing receiving unit is a receiving-control unit, and may receive information by using a receiving apparatus of the communications apparatus or the network device, for example, an antenna or a radio frequency apparatus. The foregoing sending unit is a sending-control unit, and may send information by using a sending apparatus of the communications apparatus or the network device, for example, an antenna or a radio frequency apparatus.

For example, the foregoing units may be configured as one or more integrated circuits for implementing the foregoing method, for example, one or more application-specific integrated circuits (Application Specific Integrated Circuit, ASIC), or one or more microprocessors (digital signal processor, DSP), or one or more field programmable gate arrays (Field Programmable Gate Array, FPGA), or the like. For another example, when one of the foregoing units is implemented by invoking a program by a processing element scheduling, the processing element may be a general-purpose processor, for example, a central processing unit (Central Processing Unit, CPU) or another processor that can invoke the program. For another example, the units may be integrated and implemented in a form of a system on a chip (system-on-a-chip, SOC).

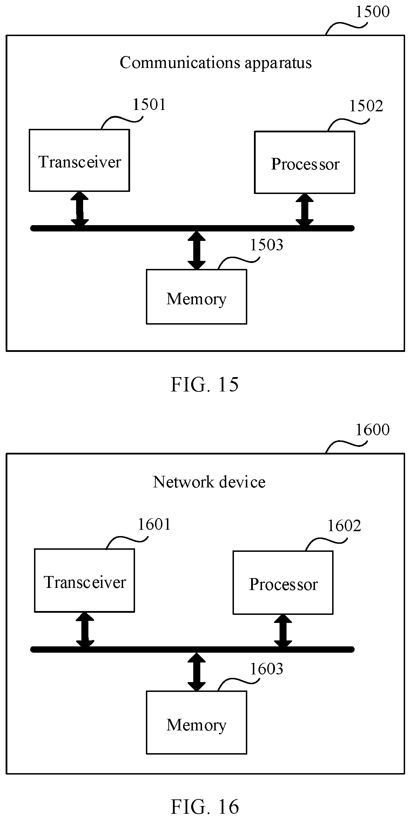

Based on the foregoing embodiments, this application further provides a communications apparatus, configured to implement the method shown in FIG. 1, FIG. 11, or FIG. 12. Referring to FIG. 15, the communications apparatus 1500 includes a transceiver 1501, a processor 1502, and a memory 1503.

The memory 1503 is configured to store a computer executable instruction. When the processor 1502 executes the computer executable instruction, the communications apparatus 1500 performs the method shown in FIG. 1, FIG. 11, or FIG. 12.

It may be understood that the carrier status indication apparatus in the embodiment shown in FIG. 13 may be implemented by using the communications apparatus 1500 shown in FIG. 15. A structure of the communications apparatus 1500 does not constitute a limitation on the embodiments of this application.

Based on the foregoing embodiments, an embodiment of this application further provides a network device, configured to implement the method shown in FIG. 1, FIG. 11, or FIG. 12. Referring to FIG. 16, the network device 1600 includes a transceiver 1601, a processor 1602, and a memory 1603.

The memory 1603 is configured to store a computer executable instruction. When the processor 1602 executes the computer executable instruction, the network device 1600 performs the method shown in FIG. 1, FIG. 11, or FIG. 12.

It may be understood that the carrier status indication apparatus in the embodiment shown in FIG. 14 may be implemented by using the network device 1600 shown in FIG. 16. A structure of the network device 1600 does not constitute a limitation on the embodiments of this application.

In FIG. 15 and FIG. 16, the processor may be a central processing unit (Central Processing Unit, CPU), a network processor (Network Processor, NP), a hardware chip, or any combination thereof. The memory may include a volatile memory (volatile memory), for example, a random access memory (random access memory, RAM); or the memory may include a non-volatile memory (non-volatile memory), for example, a read-only memory (read-only memory, ROM), a flash memory (flash memory), a hard disk drive (hard disk drive, HDD), or a solid-state drive (solid-state drive, SSD); or the memory may include a combination of the foregoing types of memories.

A person skilled in the art should understand that the embodiments of this application may be provided as a method, a system, or a computer program product. Therefore, the embodiments of this application may be hardware only embodiments, software only embodiments, or embodiments with a combination of software and hardware. Moreover, the embodiments of this application may use a computer program product that is implemented on one or more computer usable storage media (including but not limited to a disk memory, a CD-ROM, an optical memory, and the like) that include computer usable program code.

The embodiments of this application are described with reference to the flowcharts and/or block diagrams of the method, the device (system), and the computer program product according to the embodiments of this application. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can guide the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to embodiments of this application without departing from the spirit and scope of this application. This application is intended to cover these modifications and variations provided that they fall within the scope of protection defined by the following claims and their equivalent technologies.

## Claims

1. A carrier status indication method, wherein the method comprises:
communicating, by a communications apparatus, with a network device on a first uplink carrier based on a first downlink carrier; and
receiving, by the communications apparatus, carrier status indication information sent by the network device, wherein the carrier status indication information indicates carrier statuses of M carriers corresponding to N cells that are of the network device and that serve the communications apparatus, the carrier status comprises an activated state and a deactivated state, and both N and M are positive integers, wherein
the carrier status indication information indicates that the first downlink carrier is in a deactivated state and that the first uplink carrier is in an activated state, and both the first downlink carrier and the first uplink carrier are carriers of the M carriers.

2. The method according to claim 1, wherein the carrier status indication information indicates that a second downlink carrier of the M carriers is in an activated state; and
after the receiving, by the communications apparatus, carrier status indication information sent by the network device, the method further comprises:
communicating, by the communications apparatus, with the network device on the first uplink carrier based on the second downlink carrier.

3. The method according to claim 1, wherein the carrier status indication information indicates that a second uplink carrier of the M carriers is in a deactivated state, the second uplink carrier has a physical uplink control channel PUCCH, and the second uplink carrier is a carrier in a primary PUCCH group.

4. The method according to claim 3, wherein the carrier status indication information indicates that a third uplink carrier of the M carriers is in an activated state, the third uplink carrier has a PUCCH, and the third uplink carrier is a carrier in the primary PUCCH group.

5. The method according to any one of claims 1 to 4, wherein the carrier status indication information indicates carrier statuses of an uplink carrier and a downlink carrier that are corresponding to each of the N cells that are of the network device and that serve the communications apparatus.

6. The method according to any one of claims 1 to 4, wherein the carrier status indication information indicates a carrier status of each of the M carriers.

7. The method according to any one of claims 1 to 4, wherein if carriers corresponding to a first cell of the N cells that are of the network device and that serve the communications apparatus comprise a preset-type uplink carrier and at least one carrier other than the preset-type uplink carrier, the carrier status indication information indicates a carrier status of the preset-type uplink carrier corresponding to the first cell and a carrier status of the at least one carrier, other than the preset-type uplink carrier, corresponding to the first cell; or the carrier status indication information indicates a carrier status of an uplink carrier corresponding to the first cell, and a carrier status of a downlink carrier corresponding to the first cell.

8. The method according to any one of claims 1 to 4, wherein the carrier status indication information indicates a carrier status of each downlink carrier of the M carriers and a carrier status of each preset-type uplink carrier of the M carriers.

9. The method according to claim 7 or 8, wherein the preset-type uplink carrier is a supplementary uplink carrier SUL CC.

10. The method according to any one of claims 2 to 9, wherein before the communicating, by the communications apparatus, with the network device on the first uplink carrier based on the second downlink carrier, the method further comprises:
determining, by the communications apparatus, the second downlink carrier based on a downlink carrier of the M carriers and first indication information, wherein the carrier status indication information indicates that the downlink carrier is in an activated state; and
the first indication information is predefined or preconfigured, and the first indication information is used to indicate a priority of a downlink carrier used to schedule the first uplink carrier.

11. A carrier status indication method, wherein the method comprises:
scheduling, by a network device, a first uplink carrier based on a first downlink carrier; and
sending, by the network device, carrier status indication information, wherein the carrier status indication information indicates carrier statuses of M carriers corresponding to N cells that are of the network device and that serve the communications apparatus, the carrier status comprises an activated state and a deactivated state, and both N and M are positive integers, wherein
the carrier status indication information indicates that the first downlink carrier is in a deactivated state and that the first uplink carrier is in an activated state, and both the first downlink carrier and the first uplink carrier are carriers of the M carriers.

12. The method according to claim 11, wherein the carrier status indication information indicates that a second uplink carrier of the M carriers is in a deactivated state, the second uplink carrier has a PUCCH, and the second uplink carrier is a carrier in a primary PUCCH group.

13. The method according to claim 12, wherein the carrier status indication information indicates that a third uplink carrier of the M carriers is in an activated state, the third uplink carrier has a PUCCH, and the third uplink carrier is a carrier in the primary PUCCH group.

14. The method according to any one of claims 11 to 13, wherein the carrier status indication information indicates carrier statuses of an uplink carrier and a downlink carrier that are corresponding to each of the N cells that are of the network device and that serve the communications apparatus.

15. The method according to any one of claims 11 to 13, wherein the carrier status indication information indicates a carrier status of each of the M carriers.

16. The method according to any one of claims 11 to 13, wherein if carriers corresponding to a first cell of the N cells that are of the network device and that serve the communications apparatus comprise a preset-type uplink carrier and at least one carrier other than the preset-type uplink carrier, the carrier status indication information indicates a carrier status of the preset-type uplink carrier corresponding to the first cell and a carrier status of the at least one carrier, other than the preset-type uplink carrier, corresponding to the first cell; or the carrier status indication information indicates a carrier status of an uplink carrier corresponding to the first cell, and a carrier status of a downlink carrier corresponding to the first cell.

17. The method according to any one of claims 11 to 13, wherein the carrier status indication information indicates a carrier status of each downlink carrier of the M carriers and a carrier status of each preset-type uplink carrier of the M carriers.

18. The method according to claim 16 or 17, wherein the preset-type uplink carrier is a supplementary uplink carrier SUL CC.

19. A carrier status indication apparatus, wherein the apparatus comprises:
a communications unit, configured to communicate with a network device on a first uplink carrier based on a first downlink carrier; and
a receiving unit, configured to receive carrier status indication information sent by the network device, wherein the carrier status indication information indicates carrier statuses of M carriers corresponding to N cells that are of the network device and that serve the communications apparatus, the carrier status comprises an activated state and a deactivated state, and both N and M are positive integers, wherein
the carrier status indication information indicates that the first downlink carrier is in a deactivated state and that the first uplink carrier is in an activated state, and both the first downlink carrier and the first uplink carrier are carriers of the M carriers.

20. The apparatus according to claim 19, wherein the carrier status indication information indicates that a second downlink carrier of the M carriers is in an activated state; and
the communications unit is further configured to: after the receiving unit receives the carrier status indication information sent by the network device, communicate with the network device on the first uplink carrier based on the second downlink carrier.

21. The apparatus according to claim 19, wherein the carrier status indication information indicates that a second uplink carrier of the M carriers is in a deactivated state, the second uplink carrier has a physical uplink control channel PUCCH, and the second uplink carrier is a carrier in a primary PUCCH group.

22. The apparatus according to claim 21, wherein the carrier status indication information indicates that a third uplink carrier of the M carriers is in an activated state, the third uplink carrier has a PUCCH, and the third uplink carrier is a carrier in the primary PUCCH group.

23. The apparatus according to any one of claims 19 to 22, wherein the carrier status indication information indicates carrier statuses of an uplink carrier and a downlink carrier that are corresponding to each of the N cells that are of the network device and that serve the communications apparatus.

24. The apparatus according to any one of claims 19 to 22, wherein the carrier status indication information indicates a carrier status of each of the M carriers.

25. The apparatus according to any one of claims 19 to 22, wherein if carriers corresponding to a first cell of the N cells that are of the network device and that serve the communications apparatus comprise a preset-type uplink carrier and at least one carrier other than the preset-type uplink carrier, the carrier status indication information indicates a carrier status of the preset-type uplink carrier corresponding to the first cell and a carrier status of the at least one carrier, other than the preset-type uplink carrier, corresponding to the first cell; or the carrier status indication information indicates a carrier status of an uplink carrier corresponding to the first cell, and a carrier status of a downlink carrier corresponding to the first cell.

26. The apparatus according to any one of claims 19 to 22, wherein the carrier status indication information indicates a carrier status of each downlink carrier of the M carriers and a carrier status of each preset-type uplink carrier of the M carriers.

27. The apparatus according to claim 25 or 26, wherein the preset-type uplink carrier is a supplementary uplink carrier SUL CC.

28. The apparatus according to any one of claims 20 to 27, wherein the apparatus further comprises:
a processing unit, configured to: before the communications unit communicates with the network device on the first uplink carrier based on the second downlink carrier, determine the second downlink carrier based on a downlink carrier of the M carriers and first indication information, wherein the carrier status indication information indicates that the downlink carrier is in an activated state; and
the first indication information is predefined or preconfigured, and the first indication information is used to indicate a priority of a downlink carrier used to schedule the first uplink carrier.

29. A carrier status indication apparatus, wherein the apparatus comprises:
a scheduling unit, configured to schedule a first uplink carrier based on a first downlink carrier; and
a sending unit, configured to send carrier status indication information, wherein the carrier status indication information indicates carrier statuses of M carriers corresponding to N cells that are of the network device and that serve the communications apparatus, the carrier status comprises an activated state and a deactivated state, and both N and M are positive integers, wherein
the carrier status indication information indicates that the first downlink carrier is in a deactivated state and that the first uplink carrier is in an activated state, and both the first downlink carrier and the first uplink carrier are carriers of the M carriers.

30. The apparatus according to claim 29, wherein the carrier status indication information indicates that a second uplink carrier of the M carriers is in a deactivated state, the second uplink carrier has a PUCCH, and the second uplink carrier is a carrier in a primary PUCCH group.

31. The apparatus according to claim 30, wherein the carrier status indication information indicates that a third uplink carrier of the M carriers is in an activated state, the third uplink carrier has a PUCCH, and the third uplink carrier is a carrier in the primary PUCCH group.

32. The apparatus according to any one of claims 29 to 31, wherein the carrier status indication information indicates carrier statuses of an uplink carrier and a downlink carrier that are corresponding to each of the N cells that are of the network device and that serve the communications apparatus.

33. The apparatus according to any one of claims 29 to 31, wherein the carrier status indication information indicates a carrier status of each of the M carriers.

34. The apparatus according to any one of claims 29 to 31, wherein if carriers corresponding to a first cell of the N cells that are of the network device and that serve the communications apparatus comprise a preset-type uplink carrier and at least one carrier other than the preset-type uplink carrier, the carrier status indication information indicates a carrier status of the preset-type uplink carrier corresponding to the first cell and a carrier status of the at least one carrier, other than the preset-type uplink carrier, corresponding to the first cell; or the carrier status indication information indicates a carrier status of an uplink carrier corresponding to the first cell, and a carrier status of a downlink carrier corresponding to the first cell.

35. The apparatus according to any one of claims 29 to 31, wherein the carrier status indication information indicates a carrier status of each downlink carrier of the M carriers and a carrier status of each preset-type uplink carrier of the M carriers.

36. The apparatus according to claim 34 or 35, wherein the preset-type uplink carrier is a supplementary uplink carrier SUL CC.
